# EUROPEAN PATENT APPLICATION

(11) **EP 4 574 333 A1**
(43) Date of publication of application: **25.06.2025**
(21) Application number: 23882199.5
(22) Date of filing: 16.08.2023
(51) Int. Cl.: B23Q 3/00

(54) **POSITIONING AND FIXING DEVICE**

(30) Priority: 25.10.2022 JP 2022170523
(71) Applicant: PASCAL ENGINEERING CORPORATION, Itami-shi Hyogo 664-8502 (JP)
(72) Inventor: TAKAHASHI, Takuya, Itami-shi, Hyogo 664-8502 (JP)
(74) Representative: Prüfer & Partner mbB Patentanwälte · Rechtsanwälte
(86) International application number: PCT/JP2023/029561
(87) International publication number: WO 2024/089983

(57) **Abstract**

A positioning and fixing device includes a first member (100) fixed to a first mechanism (10), and a second member (200) fixed to a second mechanism (20). The first member (100) includes a tapered protruding portion (110) having a first tapered surface (110A) decreasing in diameter toward the second mechanism (20). The second member (200) includes an annular portion (210) having a second tapered surface (210A) capable of engaging the first tapered surface (110A). When the first mechanism (10) and the second mechanism (20) are brought closer to each other along a first direction to bring a first reference surface (10B) and a second reference surface (20B) into abutment with each other, the first tapered surface (110A) and the second tapered surface (210A) are brought into intimate contact with each other via elastic deformation of the tapered protruding portion (110) toward an inner diameter, whereby the first mechanism (10) and the second mechanism (20) are positioned relative to each other in a plane direction orthogonal to the first direction. A reference portion (130) of the first member (100) protrudes toward an outer diameter beyond the tapered protruding portion (110) along the direction orthogonal to the first direction. A slit portion (110B) that at least partially divides the tapered protruding portion (110) is formed in a circumferential direction of the tapered protruding portion (110).

## Description

### TECHNICAL FIELD

The present technique relates to a positioning and fixing device.

### BACKGROUND ART

PTLs 1 to 6 listed below are cited as describing a positioning and fixing device for positioning and fixing a fixation target (a work pallet, a die, or the like, to which a work to be subjected to a machining operation is attached) on a base body.

### CITATION LIST

### PATENT LITERATURE

PTL 1: Japanese Patent No. 5627664
PTL 2: Japanese Patent No. 5964640
PTL 3: Japanese Patent No. 5946706
PTL 4: Japanese Patent No. 5996306
PTL 5: German Patent Laying-Open No. 19826328
PTL 6: Japanese Utility Model No. 3182101

### SUMMARY OF INVENTION

### TECHNICAL PROBLEM

There is a need for further size reduction of a positioning and fixing device. For example, in the device described in PTL 1, space is required to fix reference members by bolts. In the positioning and fixing devices described in PTLs 2 to 5, although reference members are fixed by means of press-fit, there are manufacturing limitations to achieving further size reduction. In the positioning and fixing device described in PTL 6, although an elastic member is provided to facilitate deformation of an engagement portion, this elastic member may hinder size reduction. An object of the present technique is to provide a positioning and fixing device reduced in size.

### SOLUTION TO PROBLEM

A positioning and fixing device according to the present technique is capable of positioning a first mechanism and a second mechanism relative to each other and fixing the first mechanism and the second mechanism to each other.

The positioning and fixing device includes a first member fixed to the first mechanism, and a second member fixed to the second mechanism. The first mechanism includes a first reference surface, and a first fit hole provided to open at the first reference surface. The second mechanism includes a second reference surface facing the first reference surface along a first direction, and a second fit hole provided to open at the second reference surface.

The first member includes a cylindrical portion that is press-fit in the first fit hole, a tapered protruding portion that protrudes from the first reference surface toward the second mechanism along the first direction and that has a first tapered surface decreasing in diameter toward the second mechanism, and a reference portion that abuts the first reference surface. The cylindrical portion, the tapered protruding portion, and the reference portion are integrally formed.

The second member is press-fit in the second fit hole, and the second member includes an annular portion having a second tapered surface capable of engaging the first tapered surface.

When the first mechanism and the second mechanism are brought closer to each other along the first direction to bring the first reference surface and the second reference surface into abutment with each other, the first tapered surface and the second tapered surface are brought into intimate contact with each other via elastic deformation of the tapered protruding portion toward an inner diameter, whereby the first mechanism and the second mechanism are positioned relative to each other in a plane direction orthogonal to the first direction.

In one embodiment, in the positioning and fixing device, the reference portion of the first member protrudes toward an outer diameter beyond the tapered protruding portion along the direction orthogonal to the first direction.

In one embodiment, in the positioning and fixing device, a slit portion that at least partially divides the tapered protruding portion is formed in a circumferential direction of the tapered protruding portion.

In one embodiment, in the positioning and fixing device, the first tapered surface of the first member is formed at a distance from the first reference surface along the first direction.

In one embodiment, in the positioning and fixing device, an internal thread portion is formed on an inner circumference of the cylindrical portion of the first member.

In one embodiment, in the positioning and fixing device, an internal thread portion is formed on an inner circumference of the second member, the internal thread portion being provided at a position different from a position of the second tapered surface in the first direction.

### ADVANTAGEOUS EFFECTS OF INVENTION

According to the present technique, a positioning and fixing device reduced in size can be obtained.

### BRIEF DESCRIPTION OF DRAWINGS

Fig. 1 is a top view of a positioning and fixing device.
Fig. 2 is a transverse cross-sectional view of the positioning and fixing device (a cross-sectional view along II-II in Fig. 1).
Fig. 3 is a plan view of a base body in the positioning and fixing device (a plan view of the base body as seen in a direction III-III in Fig. 2).
Fig. 4 is an enlarged view of a portion IV in Fig. 2.
Fig. 5 is a cross-sectional view along V-V in Fig. 4.
Fig. 6 shows a step of press-fitting a reference member.
Fig. 7 shows a step of press-fitting an annular engagement member.
Fig. 8 is a transverse cross-sectional view of a positioning and fixing device according to a modification.

### DESCRIPTION OF EMBODIMENTS

Embodiments of the present technique will be described below. The same or corresponding portions are denoted by the same reference characters and description thereof may not be repeated.

In the embodiments described below, when a reference is made to a number, an amount and the like, the scope of the present technique is not necessarily limited to the number, the amount and the like unless otherwise stated. In the embodiments below, each component is not necessarily essential to the present technique unless otherwise stated. In addition, the present technique is not necessarily limited to those that achieve all of the functions and effects mentioned in the present embodiment.

As used herein, the terms "comprise," "include" and "have" are open-ended forms. That is, when a certain configuration is included, a configuration other than the certain configuration may or may not be included.

As used herein, geometric terms and terms representing positional/directional relationships, such as the terms "parallel," "orthogonal," "obliquely at 45°," "coaxial" and "along," allow for manufacturing errors or slight variations. As used herein, terms representing relative positional relationships such as "upper side" and "lower side" are each used to indicate a relative positional relationship in one state, and the relative positional relationship can be inverted or rotated at any angle depending on the direction in which each mechanism is installed (e.g., the entire mechanism is vertically inverted).

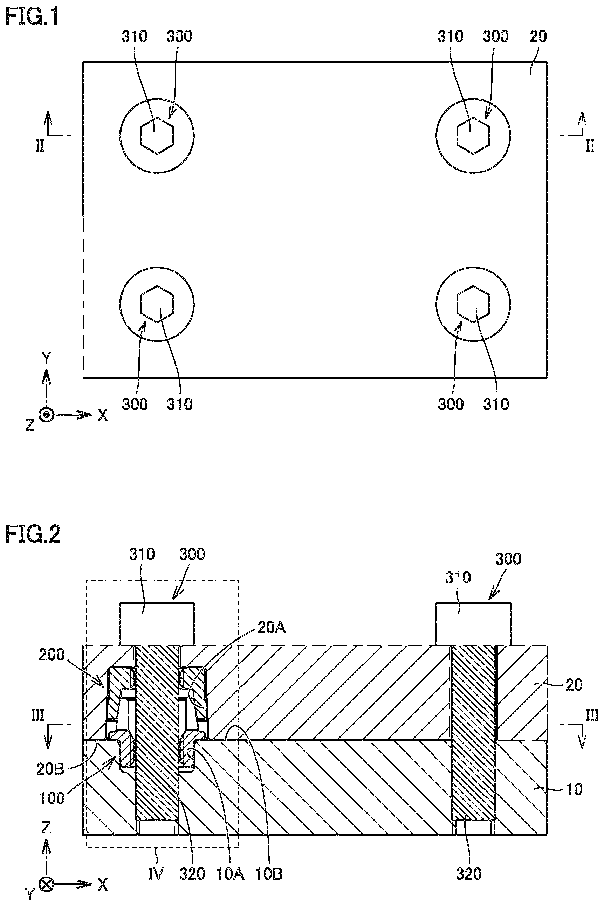

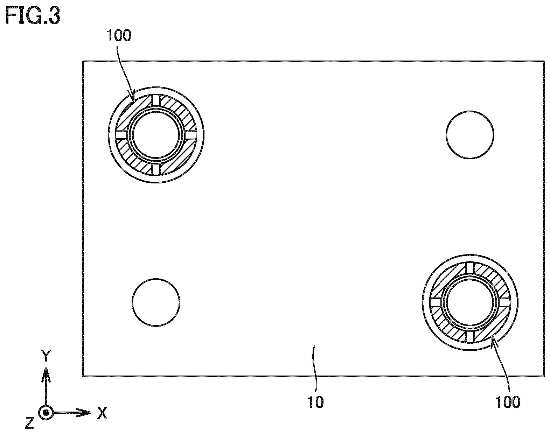

Fig. 1 is a top view of a positioning and fixing device, Fig. 2 is a cross-sectional view along II-II in Fig. 1, and Fig. 3 is a plan view of a base body 10 as seen in a direction III-III in Fig. 2.

As shown in Fig. 2, the positioning and fixing device according to the present embodiment is capable of positioning base body 10 (first mechanism) and a pallet 20 (second mechanism) relative to each other and fixing base body 10 and pallet 20 to each other.

Pallet 20 is a fixation target that is fixed to base body 10. For example, a work to be subjected to a cutting operation is attached to pallet 20. Pallet 20 is an example of the fixation target, and the fixation target in the present technique is not limited as such. Instead of pallet 20, for example, a die or the like may be employed as the fixation target. Base body 10 may be fixed to a stationary object, or may be movable by being supported by a rotation support mechanism or the like. The positioning and fixing device according to the present technique may be applied to a robot (such as an arm).

Base body 10 has a fit hole 10A (first fit hole) and a reference surface 10B (first reference surface). Pallet 20 has a fit hole 20A (second fit hole) and a reference surface 20B (second reference surface). Reference surfaces 10B and 20B face each other along a Z-axis direction (first direction). Fit holes 10A and 20A are provided to open at reference surfaces 10B and 20B, respectively.

A reference member 100 (first member) is fixed to base body 10. An annular engagement member 200 (second member) is fixed to pallet 20.

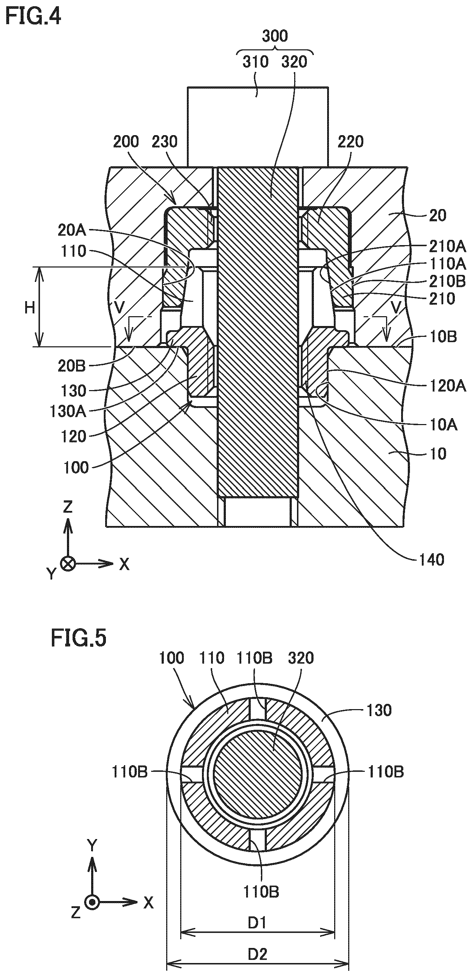

Fig. 4 is an enlarged view of a portion IV in Fig. 2. Fig. 5 is a cross-sectional view along V-V in Fig. 4.

As shown in Fig. 4, reference member 100 includes an engagement protruding portion 110 (tapered protruding portion), a fit cylindrical portion 120 (cylindrical portion), a reference flange portion 130 (reference portion), and an internal thread portion 140. Engagement protruding portion 110, fit cylindrical portion 120, and reference flange portion 130 are integrally formed.

Engagement protruding portion 110 protrudes from reference surface 10B of base body 10 toward pallet 20 along the Z-axis direction. The outer circumferential surface of engagement protruding portion 110 forms an engagement tapered surface 110A (first tapered surface) decreasing in diameter toward pallet 20 (upper side in the figure).

Engagement protruding portion 110 is provided opposite to base body 10 (upper side in the figure) with respect to reference flange portion 130. Therefore, engagement tapered surface 110A is formed at a distance from reference surface 10B of base body 10 along the Z-axis direction. Since reference flange portion 130 is provided between engagement protruding portion 110 and base body 10, a height H from reference surface 10B to a tip of engagement protruding portion 110 is increased. As a result, deformation of engagement protruding portion 110 in a direction of tilt (a direction crossing the Z-axis) is facilitated.

Fit cylindrical portion 120 is press-fit in fit hole 10A such that a press-fit abutment surface 120A is in intimate contact with the inner circumferential surface of fit hole 10A of base body 10. Reference member 100 is thus fixed to base body 10. An annular gap is formed between the bottom surface of fit hole 10A and the lower end surface of fit cylindrical portion 120. Reference member 100 may be fixed using a method other than press-fit.

Reference flange portion 130 has an abutment surface 130A that abuts reference surface 10B of base body 10. Reference flange portion 130 is formed to protrude toward the outer diameter beyond engagement protruding portion 110 along an X-Y plane direction orthogonal to the Z-axis direction. By way of example, a ratio (D2/D1) of a diameter D2 of reference flange portion 130 to a diameter D1 of the outermost circumference of engagement protruding portion 110 is, for example, about 1.1 or more and 1.3 or less.

Internal thread portion 140 is formed on the inner circumference of fit cylindrical portion 120. When removing reference member 100 from base body 10, a rod-shaped jig is screwed to internal thread portion 140 and the jig is pulled, to thereby pull out fit cylindrical portion 120 press-fit in fit hole 10A.

Annular engagement member 200 includes an annular portion 210, a bottom portion 220, and an internal thread portion 230. Annular portion 210 and bottom portion 220 are integrally formed.

Annular portion 210 has an engagement tapered surface 210A (second tapered surface) and a press-fit abutment surface 210B. Engagement tapered surface 210A is capable of engaging engagement tapered surface 110A (first tapered surface) of engagement protruding portion 110 during the positioning and fixing of pallet 20.

Annular engagement member 200 is press-fit in fit hole 20A such that press-fit abutment surface 210B of annular portion 210 is in intimate contact with the inner circumferential surface of fit hole 20A of pallet 20. Annular engagement member 200 is press-fit until the upper surface of bottom portion 220 abuts the bottom surface of fit hole 20A. Annular engagement member 200 is thus fixed to pallet 20. Annular engagement member 200 may be fixed using a method other than press-fit. Annular engagement member 200 is arranged substantially concentrically with reference member 100.

Internal thread portion 230 is formed on the inner circumference of bottom portion 220. That is, internal thread portion 230 is provided at a position different from the position of engagement tapered surface 210A in the Z-axis direction. When removing annular engagement member 200 from pallet 20, a rod-shaped jig is screwed to internal thread portion 230 and the jig is pulled, to thereby pull out annular portion 210 press-fit in fit hole 20A.

As shown in Fig. 5, slit portions 110B that divide engagement protruding portion 110 are formed in the circumferential direction of engagement protruding portion 110 of reference member 100. Slit portions 110B may be formed in a part of (partially in) the height direction (the Z-axis direction) of engagement protruding portion 110. Although four slit portions 110B are formed so as to be evenly arranged in the circumferential direction in the example of Fig. 5, the number of slit portions 110B can be changed as appropriate. Since slit portions 110B are provided, the deformation of engagement protruding portion 110 in the direction of tilt (the direction crossing the Z-axis) is facilitated.

As shown in Figs. 1 and 2, base body 10 and pallet 20 are fixed to each other by four bolts 300. Bolt 300 includes a head portion 310 and a shank portion 320. Head portion 310 of bolt 300 abuts pallet 20, and shank portion 320 of bolt 300 is screwed into base body 10. Base body 10 and pallet 20 are pulled toward each other by applying a fastening force to bolt 300.

Base body 10 is set as being fixed on a table of a machine tool, for example. One or more works (not shown) are secured to pallet 20 by a clamping device or bolts that is/are not shown. After pallet 20 is transferred onto base body 10, and they are positioned relative to each other in the horizontal direction (the X-Y plane direction) and the vertical direction (the Z-axis direction) and fixed to each other, the one or more works on pallet 20 are machined.

By way of example, each of base body 10 and pallet 20 is formed of a substantially square or substantially rectangular steel flat plate member. Reference surface 10B (upper surface) of base body 10 serves as a horizontal reference seat surface on which pallet 20 is placed and on which reference surface 20B (lower surface) of pallet 20 is seated to position pallet 20 in the vertical direction. Reference surface 20B of pallet 20 is formed to be capable of abutting reference surface 10B of base body 10 in a surface contact manner. When reference surfaces 10B and 20B are in contact with each other, the positioning in the Z-axis direction is performed.

Reference member 100 (and annular engagement member 200) is provided substantially concentrically with two of four bolts 300. That is, bolts 300 are inserted in reference member 100 and annular engagement member 200.

As shown in Fig. 3, a pair of reference members 100 are located at a distance from each other on a diagonal line of base body 10 and pallet 20. Thus, the positioning in the horizontal direction (the X-Y plane direction) is performed.

As described above, when a fastening force is applied to four bolts 300, base body 10 and pallet 20 are brought closer to each other along the Z-axis direction, and reference surfaces 10B and 20B abut each other. Thus, base body 10 and pallet 20 are positioned relative to each other in the Z-axis direction.

At this time, engagement protruding portion 110 of reference member 100 is elastically deformed toward the inner diameter. Engagement tapered surface 110A (first tapered surface) and engagement tapered surface 210A (second tapered surface) are brought into intimate contact with each other via this elastic deformation. Thus, base body 10 and pallet 20 are positioned relative to each other in an X-axis direction and a Y-axis direction (the X-Y plane direction). In the state where engagement tapered surfaces 110A and 210A are simply in contact with each other, reference surfaces 10B and 20B do not abut each other. Bolt 300 is further tightened in this state, to bring base body 10 and pallet 20 closer to each other until reference surfaces 10B and 20B abut each other, while engagement protruding portion 110 is elastically deformed.

In the positioning and fixing device according to the present embodiment, the above operation achieves two-surface restraint through the abutment between reference surfaces 10B and 20B and the abutment between engagement tapered surfaces 110A and 210A. Thus, base body 10 and pallet 20 can be positioned relative to each other with high accuracy, and base body 10 and pallet 20 can be fixed to each other.

When the fastening force is removed from four bolts 300, reference surfaces 10B and 20B are separated from each other, which allows detachment of pallet 20 from base body 10. At this time, engagement protruding portion 110 of reference member 100 returns to the shape before the elastic deformation.

When the diameters of reference member 100 and annular engagement member 200 are reduced in order to achieve size reduction of the positioning and fixing device, this reduction also results in a reduced contact area between engagement tapered surface 110A and engagement tapered surface 210A. When the diameters of reference member 100 and annular engagement member 200 are simply reduced, the contact area between engagement tapered surface 110A and engagement tapered surface 210A is reduced, and the amount of elastic deformation of engagement protruding portion 110 toward the inner diameter tends to be small even when a surface pressure similar to that before the reduction is applied. As a result, it may not be possible to obtain a desired amount of deformation required for the positioning and fixing. Although it is possible to increase the amount of elastic deformation by reducing the thickness of engagement protruding portion 110, the thinning of engagement protruding portion 110 is subject to manufacturing restrictions, and may also cause an excessive increase in the amount of deformation and thus plastic deformation.

In contrast, in the positioning and fixing device according to the present embodiment, since reference flange portion 130 is provided between engagement protruding portion 110 and base body 10, height H from reference surface 10B to the tip of engagement protruding portion 110 can be increased. Thus, the amount of elastic deformation of engagement protruding portion 110 toward the inner diameter can be increased. In addition, since slit portions 110B are provided to divide engagement protruding portion 110 in the circumferential direction, the amount of elastic deformation of engagement protruding portion 110 toward the inner diameter can be further increased. As a result, the positioning and fixing device reduced in size can be obtained.

By forming fit hole 20A deeply, the increase in height H from reference surface 10B to the tip of engagement protruding portion 110 can be absorbed. In the positioning and fixing device according to the present embodiment, reference member 100 and annular engagement member 200 are reduced in the radial direction (the X-Y plane direction) and increased in the axial direction (the Z-axis direction), and the increase is absorbed by the thickness of pallet 20 (the depth of fit hole 20A).

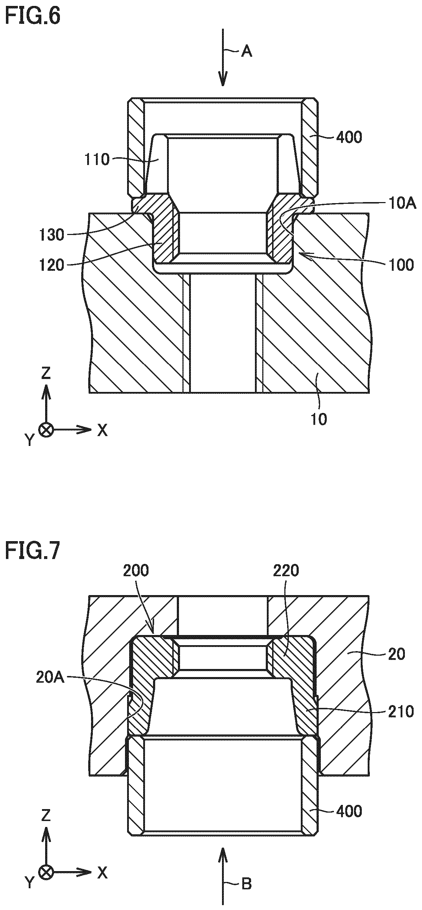

Figs. 6 and 7 show steps of press-fitting reference member 100 and annular engagement member 200, respectively. When fixing reference member 100 to base body 10, a press-fit jig 400 is brought into abutment with the upper surface of reference flange portion 130 and pressed in a direction of an arrow A, to thereby press-fit fit cylindrical portion 120 in fit hole 10A of base body 10, as shown in Fig. 6. When fixing annular engagement member 200 to pallet 20, press-fit jig 400 is brought into abutment with a tip of annular portion 210 and pressed in a direction of an arrow B, to thereby press-fit annular portion 210 in fit hole 20A of pallet 20, as shown in Fig. 7.

Same press-fit jig 400 can be used in the step of press-fitting reference member 100 (Fig. 6) and the step of press-fitting annular engagement member 200 (Fig. 7).

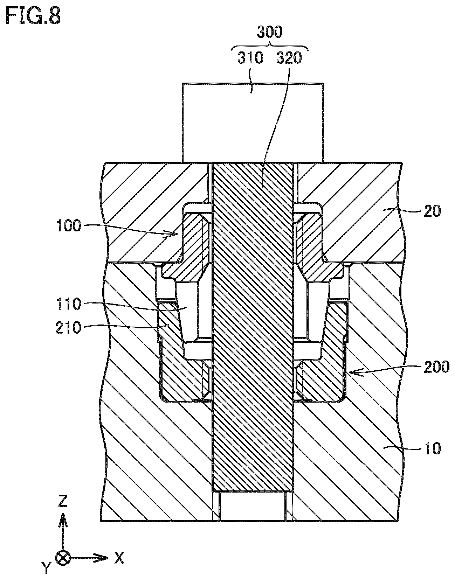

Fig. 8 is a transverse cross-sectional view of a positioning and fixing device according to a modification. As shown in Fig. 8, annular engagement member 200 may be fixed to base body 10 and reference member 100 may be fixed to pallet 20. In this case, pallet 20 forms the "first mechanism," and base body 10 forms the "second mechanism."

In addition, reference flange portion 130 may not be provided. Furthermore, internal thread portions 140 and 230 may not be provided.

Although the embodiments of the present technique have been described, it should be understood that the embodiments disclosed herein are illustrative and non-restrictive in every respect. The scope of the present technique is defined by the terms of the claims, and is intended to include any modifications within the scope and meaning equivalent to the terms of the claims.

### REFERENCE SIGNS LIST

10 base body; 10A fit hole; 10B reference surface; 20 pallet; 20A fit hole; 20B reference surface; 100 reference member; 110 engagement protruding portion; 110A engagement tapered surface; 110B slit portion; 120 fit cylindrical portion; 120A press-fit abutment surface; 130 reference flange portion; 130A abutment surface; 140 internal thread portion; 200 annular engagement member; 210 annular portion; 210A engagement tapered surface; 210B press-fit abutment surface; 220 bottom portion; 230 internal thread portion; 300 bolt; 310 head portion; 320 shank portion; 400 press-fit jig.

## Claims

1. A positioning and fixing device capable of positioning a first mechanism and a second mechanism relative to each other and fixing the first mechanism and the second mechanism to each other, the positioning and fixing device comprising:
a first member fixed to the first mechanism; and
a second member fixed to the second mechanism, wherein
the first mechanism includes a first reference surface, and a first fit hole provided to open at the first reference surface,
the second mechanism includes a second reference surface facing the first reference surface along a first direction, and a second fit hole provided to open at the second reference surface,
the first member includes a cylindrical portion that is press-fit in the first fit hole, a tapered protruding portion that protrudes from the first reference surface toward the second mechanism along the first direction and that has a first tapered surface decreasing in diameter toward the second mechanism, and a reference portion that abuts the first reference surface, the cylindrical portion, the tapered protruding portion, and the reference portion being integrally formed,
the second member is press-fit in the second fit hole, and the second member includes an annular portion having a second tapered surface capable of engaging the first tapered surface,
the reference portion of the first member protrudes toward an outer diameter beyond the tapered protruding portion along a direction orthogonal to the first direction, and
when the first mechanism and the second mechanism are brought closer to each other along the first direction to bring the first reference surface and the second reference surface into abutment with each other, the first tapered surface and the second tapered surface are brought into intimate contact with each other via elastic deformation of the tapered protruding portion toward an inner diameter, whereby the first mechanism and the second mechanism are positioned relative to each other in a plane direction orthogonal to the first direction.

2. A positioning and fixing device capable of positioning a first mechanism and a second mechanism relative to each other and fixing the first mechanism and the second mechanism to each other, the positioning and fixing device comprising:
a first member fixed to the first mechanism; and
a second member fixed to the second mechanism, wherein
the first mechanism includes a first reference surface, and a first fit hole provided to open at the first reference surface,
the second mechanism includes a second reference surface facing the first reference surface along a first direction, and a second fit hole provided to open at the second reference surface,
the first member includes a cylindrical portion that is press-fit in the first fit hole, a tapered protruding portion that protrudes from the first reference surface toward the second mechanism along the first direction and that has a first tapered surface decreasing in diameter toward the second mechanism, and a reference portion that abuts the first reference surface, the cylindrical portion, the tapered protruding portion, and the reference portion being integrally formed,
the second member is press-fit in the second fit hole, and the second member includes an annular portion having a second tapered surface capable of engaging the first tapered surface,
a slit portion that at least partially divides the tapered protruding portion is formed in a circumferential direction of the tapered protruding portion, and
when the first mechanism and the second mechanism are brought closer to each other along the first direction to bring the first reference surface and the second reference surface into abutment with each other, the first tapered surface and the second tapered surface are brought into intimate contact with each other via elastic deformation of the tapered protruding portion toward an inner diameter, whereby the first mechanism and the second mechanism are positioned relative to each other in a plane direction orthogonal to the first direction.

3. The positioning and fixing device according to claim 1 or 2, wherein
the first tapered surface of the first member is formed at a distance from the first reference surface along the first direction.

4. The positioning and fixing device according to any one of claims 1 to 3, wherein
an internal thread portion is formed on an inner circumference of the cylindrical portion of the first member.

5. The positioning and fixing device according to any one of claims 1 to 4, wherein
an internal thread portion is formed on an inner circumference of the second member, the internal thread portion being provided at a position different from a position of the second tapered surface in the first direction.
